# EUROPÄISCHE PATENTANMELDUNG

(11) **EP 4 005 706 A1**
(43) Veröffentlichungstag der Anmeldung: **01.06.2022**
(21) Anmeldenummer: 20210014.5
(22) Anmeldetag: 26.11.2020
(51) Int. Cl.: B22F 10/20, B22F 10/30, B29C 64/153, B29C 64/393, B33Y 10/00, B33Y 50/02

(54) **VERFAHREN ZUM SCHICHTWEISEN HERSTELLEN EINES OBJEKTS**

(71) Anmelder: Siemens Aktiengesellschaft, 80333 München (DE)
(72) Erfinder: Heinrichsdorff, Frank, 14513 Teltow (DE); Kastsian, Darya, 14612 Falkensee (DE); Reznik, Daniel, 13503 Berlin (DE)

(57) **Zusammenfassung**

Die Erfindung betrifft ein Verfahren zum schichtweisen Herstellen eines Objekts mit einem pulverbasierten 3D-Druckverfahren durch selektives Verfestigen von Schichten (n, n+l,n+2) eines Pulvers in einem Pulverbett (100). Um lokalen Überhitzungen bei selektiven, pulverbasierten 3D-Druckverfahren, vorzubeugen werden jeweils zumindest zwei aufeinanderfolgende Schichten (n, n+l,n+2) zu einer Gruppe (G1, G2) zusammengefasst. Das Verfahren umfasst weiterhin für jede der Gruppen (G1, G2) die folgenden Schritte:
- Bereitstellen einer ersten Schicht (n) des Pulvers,
- Verfestigen zumindest eines Teils der ersten Schicht (n) mit ersten Belichtungsvektoren (Vn), die zueinander parallel und in einem definierbaren Abstand (h) zueinander angeordnet sind,
- Bereitstellen einer zweiten Schicht (n+1) Pulver,
- Verfestigen zumindest eines Teils der zweiten Schicht (n+1) mit zweiten Belichtungsvektoren (Vn+1), die um einen Versatz (x1, x2) parallel bezüglich der ersten Belichtungsvektoren (Vn) angeordnet sind,
wobei die Belichtungsvektoren (Vn, Vn+1, Vn+2) von aufeinanderfolgenden Gruppen (G1, G2) um einen Winkel (α) zueinander rotiert sind.

## Beschreibung

Die Erfindung betrifft ein Verfahren zum schichtweisen Herstellen eines Objekts mit einem pulverbasierten 3D-Druckverfahren.

Das Verfahren kann bei pulverbasierten 3D Druckverfahren, insbesondere als eine optimierte Verfahrensweise, im Rahmen eines selektiven Laserschmelz-Prozesses (Selective Laser Melting, kurz: SLM) zum Einsatz kommen.

Es hat sich gezeigt, dass bisher favorisierte Verfahrensweisen viele lokale Überhitzungen erzeugen können. Diese Überhitzungen können größere Metallperlen erzeugen, die den weiteren Beschichtungsvorgang mit Pulver erheblich stören. Die Qualität der realisierten Bauteile wird so deutlich vermindert oder es kann sogar zum Abbruch des Bauprozesses kommen.

Es ist Aufgabe der Erfindung lokale Überhitzungen bei selektiven, pulverbasierten 3D-Druckverfahren, insbesondere Schmelzverfahren zu vermeiden.

Diese Aufgabe wird durch ein Verfahren mit den im Anspruch 1 angegebenen Merkmalen gelöst.

Die Aufgabe wird gelöst durch ein Verfahren zum schichtweisen Herstellen eines Objekts mit einem pulverbasierten 3D-Druckverfahren durch selektives Verfestigen von Schichten eines Pulvers in einem Pulverbett gelöst. Jeweils zumindest zwei aufeinanderfolgende Schichten werden dabei zu einer Gruppe zusammengefasst. Für jede der Gruppen umfasst das Verfahren die folgenden Schritte:
- Bereitstellen einer ersten Schicht des Pulvers,
- Verfestigen zumindest eines Teils der ersten Schicht mit ersten Belichtungsvektoren, die zueinander parallel und in einem definierbaren Abstand zueinander angeordnet sind,
- Bereitstellen einer zweiten Schicht Pulver,
- Verfestigen zumindest eines Teils der zweiten Schicht mit zweiten Belichtungsvektoren, die um einen Versatz parallel bezüglich der ersten Belichtungsvektoren angeordnet sind. Die Belichtungsvektoren von aufeinanderfolgenden Gruppen sind um einen Winkel zueinander rotiert.

In anderen Worten werden zumindest zwei aufeinanderfolgende Schichten in einer Gruppe aufgebaut, wobei innerhalb dieser Gruppe die Vektoren zwar parallel aber zueinander versetzt angeordnet sind. Ist nun die Gruppe fertiggestellt, so wird die darauffolgende Gruppe um einen Winkel rotiert. Es hat sich herausgestellt, dass durch die Kombination von einzelnen Gruppen, in denen ein Versatz vorgesehen ist, und der Rotation zwischen den Gruppen, eine erhebliche Verbesserung der Neigung zu einer Überhitzung erreicht werden kann. Die mechanischen Eigenschaften des Objekts konnten ebenfalls verbessert werden.

In einer weiteren Ausführungsform ist der Abstand zwischen den Belichtungsvektoren so gewählt, dass durch das Verfestigen entstehende Bahnen einen Überlapp, insbesondere einen gemittelten Überlapp, von höchstens 20%, vorzugsweise von höchstens 10%, insbesondere von höchstens 5% aufweisen. Der Abstand zwischen den Vektoren ist dabei mit hoher Genauigkeit am Scanner einstellbar. Der Überlapp wird jeweils bzgl. der Bahnbreite bestimmt. Der mittlere Überlapp ist dabei der Überlapp, der sich im Mittel in ein oder mehreren Schichten bei konstantem Abstand zwischen den Belichtungsvektoren einstellt. Die Bahnbreite ergibt sich aus dem verwendeten Material, der Fokus-Breite des verwendeten Energiestrahls (bspw. Laserstrahls) am Einstrahlort im Pulverbett sowie entsprechender weiterer Parameter, wie der eingestrahlten Leistung. Diese Parameter sind für gängige Anlagen-Werkstoff-Paarungen bekannt. Die Bahnbreite kann weiterhin durch Versuche für das verwendete Materialpulver und entsprechender Parametervariationen der jeweilig zum Einsatz kommenden Anlage ermittelt werden. Hier können beispielsweise Schliffbilder erstellt werden und daraus eine mittlere Bahnbreite und ein mittlerer Abstand zwischen den verfestigten Bahnen ermittelt werden.

Es hat sich herausgestellt, dass ein verhältnismäßig geringer Überlapp, der für sich genommen zu einer zu geringen Festigkeit der verfestigten Schichten führen würde, in Verbindung mit den weiteren Schichten, die einen Versatz aufweisen, zu einer hohen Festigkeit bei einer gleichzeitig vorteilhaften Verringerung der Neigung zu Überhitzung führt.

In einer weiteren Ausführungsform ist der Abstand so gewählt, dass die durch das Verfestigen entstehenden Bahnen einen mittleren Überlapp von 10% bis -10%, insbesondere 5% bis -5%, aufweisen. Der Überlapp kann dabei durch Einstellen des Abstands der Belichtungsvektoren am Scanner (an der Steuerung des Energiestrahls) erreicht werden. Ein negativer Überlapp entspricht dabei einem Abstand zwischen den Bahnen entsprechend eines Anteils der Bahnbreite. In anderen Worten sind die Bahnen durchschnittlich auf Stoß zueinander angeordnet. Somit ist in dieser Ausführungsform kein Überlapp, nur ein sehr geringer positiver oder negativer Überlapp vorhanden. Dies kann dazu führen, dass einzelne Bahnen unter Umständen nicht vollständig miteinander verschweißt sind. Dementsprechend kommt der darauffolgenden Schichte innerhalb der Gruppe die Bedeutung zu, eine endgültige Verschweißung zu erreichen.

In einer weiteren Ausführungsform entspricht der Versatz höchstens 50%, insbesondere 50% einer Breite von durch das Verfestigen entstehenden Bahnen. Wenn der Versatz im Mittel 50 % entspricht, so ordnen sich die Bahnen der zweiten Schicht zwischen den Bahnen der ersten Schicht an und können so eine direkte Verfestigung der Gruppe erreichen. Dies erhöht die Festigkeit der entstehenden Gruppe.

In einer weiteren Ausführungsform ist der Winkel so gewählt, dass die Ausrichtung einer der folgenden Gruppen frühestens nach der Verfestigung von zehn weiteren Gruppen wieder der ursprünglichen Gruppe entspricht. Hier gilt es zu erreichen, dass die Ausrichtung über möglichst viele Schichten nicht wieder der Ausrichtung der ersten Gruppe entspricht, da so der Effekt der verminderten Überhitzung verbessert wird. Weiterhin wird die mechanische Stabilität und insbesondere die Isotropie der mechanischen Eigenschaften des Objekts verbessert, wenn zumindest 5 Gruppen mit voneinander verschiedener Winkel-Ausrichtung gefertigt werden.

In einer weiteren Ausführungsform beträgt der Winkel mindestens 30°. So kann sichergestellt werden, dass die Gebiete, an denen der Energiestrahl bzgl. der zur fertigenden Fläche immer wieder Eintritt bzw. Austritt, sich von Gruppe zu Gruppe hinreichend unterscheiden, sodass eine Neigung zur Überhitzung an einzelnen Stellen weiter vermindert wird.

In einer weiteren Ausführungsform beträgt der Winkel höchstens 150°. Bevorzugt beträgt der Winkel höchstens 130°. Dies führt ergänzend oder alternativ zur vorigen Ausführungsform dazu, dass die Gebiete, an denen der Energiestrahl bzgl. der zur fertigenden Fläche immer wieder Eintritt bzw. Austritt, sich von Gruppe zu Gruppe hinreichend unterscheiden. Die Gebiete liegen dabei entsprechend dem Winkel weit auseinander, sodass hier keine Überhitzung auftritt.

In einer weiteren Ausführungsform ist der Winkel verschieden von 90° oder Vielfachen davon gewählt. Dies stellt sicher, dass die Ausrichtung nicht bereits nach wenigen Gruppen bzw. wenigen Schichten wieder der ursprünglichen Ausrichtung entspricht. Dies stellt eine hohe Anisotropie des entstehenden Objekts sicher und ist weiterhin vorteilhaft bzgl. eines gleichmäßigen Wärmeeintrags.

In einer weiteren Ausführungsform durchdringen die durch das Verfestigen entstehenden Bahnen zumindest die vorhergehende Schicht. Bevorzugt durchdringen die entstehenden Bahnen insbesondere die vorhergehenden drei Schichten. In anderen Worten umfasst die Tiefe der Bahnen, also die Eindringtiefe in das darunterliegende Material bzw. die darunterliegenden Schichten, neben der aktuellen Schicht auch darunterliegende Schichten. Es hat sich herausgestellt, dass die Bahnen im Regelfall mindestens zwei Schichten umfasst höchstens aber fünf Schichten, wobei die Schichtdicke im verfestigten Zustand zwischen 20-60µm und die vorhergehende unverfestigte, geraktelte Schüttdicke des Pulvers 40 bis 120µm entsprechen kann. Die Tiefe der Bahnen entspricht also einem Vielfachen einer Schichtdicke. So greifen die durch den Versatz positionierten Schichten ineinander und eine Verbesserung des Gefüges tritt ein.

In einer weiteren Ausführungsform umfasst zumindest eine der Gruppen zumindest eine dritte Schicht. Die zweite Schicht ist dabei um einen ersten Versatz bezüglich der ersten Schicht angeordnet und die dritte Schicht um einen zweiten Versatz bezüglich der zweiten Schicht. Die Versätze können dabei den gleichen Wert aufweisen.

Im Folgenden wird die Erfindung anhand der in den Figuren dargestellten Ausführungsbeispiele näher beschrieben und erläutert. Es zeigen:
- FIG 1: schematisch erste Belichtungsvektoren in einem Pulverbett mit einer ersten Schicht,
- FIG 2: Bahnen von verfestigtem Material einer ersten Schicht im Querschnitt,
- FIG 3: schematisch zweite Belichtungsvektoren in einem Pulverbett, das bereits erste und zweite Bahnen verfestigtes Material aufweist,
- FIG 4: Bahnen von verfestigtem Material in einer ersten und einer zweiten Schicht im Querschnitt,
- FIG 5: Bahnen von verfestigtem Material in einer ersten, zweiten und dritten Schicht im Querschnitt,
- FIG 6: schematisch einen Winkel zwischen zwei Schichten und
- FIG 7: einen Abstand zwischen zwei Belichtungsvektoren und einen Überlapp.

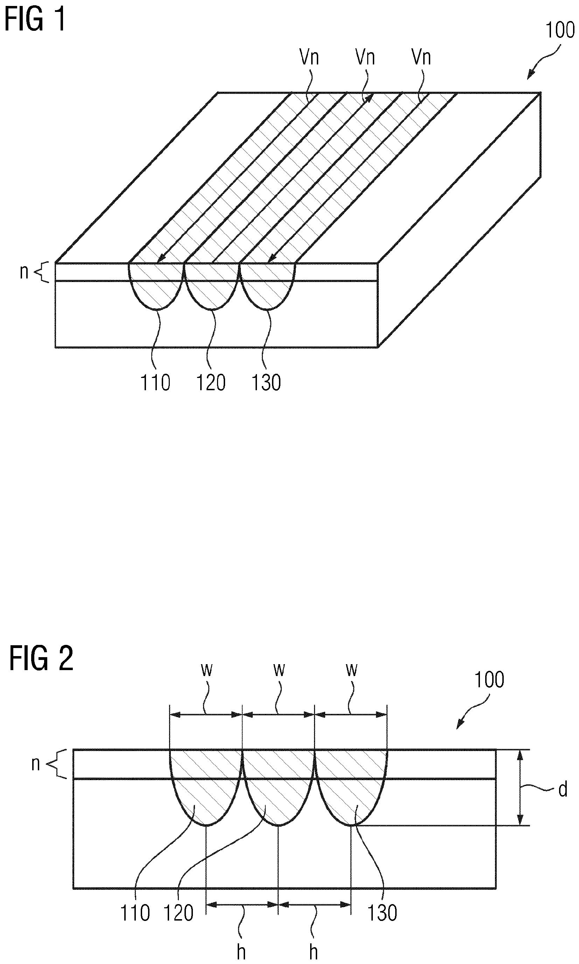

FIG 1 zeigt schematisch erste Belichtungsvektoren Vn in einem Pulverbett 100 mit einer ersten Schicht n. Die ersten Belichtungsvektoren VN führen dazu, dass sich bereits verfestigte Bahnen 110, 120, 130 gebildet haben. Die Belichtungsvektoren VN sind dabei parallel zueinander angeordnet und werden durch einen Energiestrahl, z.B. einen Laser oder ein Elektronenstrahl bereitgestellt. Die Belichtungsvektoren beinhalten dabei die Geschwindigkeit, die Leistung und die Strahlbreite des Energiestrahls. Die bestehenden Bahnen 110, 120, 130 sind dabei nur stellvertretend für eine sehr große Anzahl von Schweißbahnen, die im Rahmen eines additiven Fertigungsprozesses entstehen. In der Regel wird eine Anzahl von deutlich größer drei Bahnen zur Fertigung einer Schicht eines Objekts benötigt. Der Übersichtlichkeit halber sind im Folgenden nur eine geringe Anzahl gewählt um die Beziehungen zwischen den einzelnen Bahnen 110, 120, 130 nachvollziehbar darstellen zu können.

FIG 2 zeigt die Bahnen 110, 120, 130 von verfestigtem Material der ersten Schicht n aus FIG 1 im Querschnitt. Die Bahnen 110, 120, 130 von verfestigtem Material in der ersten Schicht n dabei eine Breite w auf sowie eine Abstand h auf, auch Hatch-Abstand genannt. Der Abstand h wird ausgehend von den Belichtungsvektoren bzw. vom Mittelpunkt der durch das Belichten entstehenden verfestigten Bahnen 110, 120, 130 gemessen. Im vorliegenden Beispiel weisen die drei Bahnen 110, 120, 130 eine Abstand h auf, der so gewählt ist, dass er der Breite w der Bahnen 110, 120, 130 entspricht. D. h. die Bahnen 110, 120, 130 berühren sich am äußeren Ende. Ein Überlapp existiert im vorliegenden Beispiel in FIG 2 nicht oder nur im Umfang der Toleranz des jeweilig zum Einsatz kommenden Prozesses.

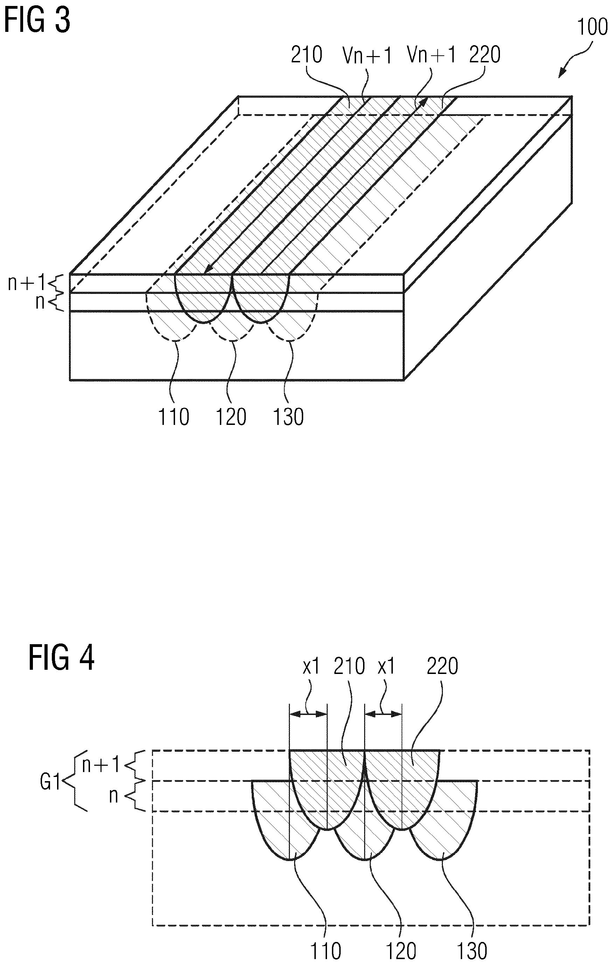

FIG 3 zeigt schematisch zweite Belichtungsvektoren Vn+1 in einem Pulverbett 100, das bereits erste und zweite Bahnen 110, 120, 130, 210, 220 verfestigtes Material aufweist. Die ersten Bahnen 110, 120, 130 sind dabei durch Belichtung der ersten Schicht n entstanden, die zweiten Bahnen 210, 220 sind analog durch Belichtung der zweiten Schicht n+1 mit den zweiten Belichtungsvektoren Vn+1 entstanden. Auch hier sind in der zweiten Schicht n+1 lediglich zwei Bahnen 210, 220 dargestellt, in Realität ist auch die zweite Schicht n+1 gemäß der zu fertigenden Geometrie des Objekts aus deutlich mehr Bahnen aufgebaut. Die Vereinfachung des vorliegenden Beispiels dient der verbesserten Darstellung des Prinzips.

Die zweiten Belichtungsvektoren Vn+1 sind dabei parallel und um einen Versatz verschoben zu den hier nicht dargestellten ersten Belichtungsvektoren angeordnet.

FIG 4 zeigt dazu Bahnen 110, 120, 130, 210, 220 von verfestigtem Material in einer ersten und einer zweiten Schicht n, n+1 im Querschnitt, wobei ein Versatz x1 eingezeichnet ist. Der Versatz x1 wird dabei von Mittelachse zu Mittelachse der Bahnen festgelegt, im vorliegenden Fall die Mittelachse der Bahn 110 zur Mittelachse der Bahn 210 sowie der Mittelachse der Bahn 120 zur Mittelachse der Bahn 220. Die Mittelachse ist dabei auch der Ort an dem die Belichtungsvektoren Vn, Vn+1 auftreffen. Weiterhin ist zu sehen, dass die erste Schicht n und die zweite Schicht n+1 in einer ersten Gruppe G1 zusammengefasst sind. Dementsprechend sind die Bahnen 110, 120, 130, 210, 220 innerhalb der ersten Gruppe G1 parallel zueinander angeordnet. Eine hier noch nicht gezeigte zweite Gruppe G2 würde erfindungsgemäß eine gegenüber der ersten Gruppe geänderte Ausrichtung aufweisen. Dies führt zu einer weiteren Verbesserung der Temperaturverteilung unter Vermeidung von Überhitzungen.

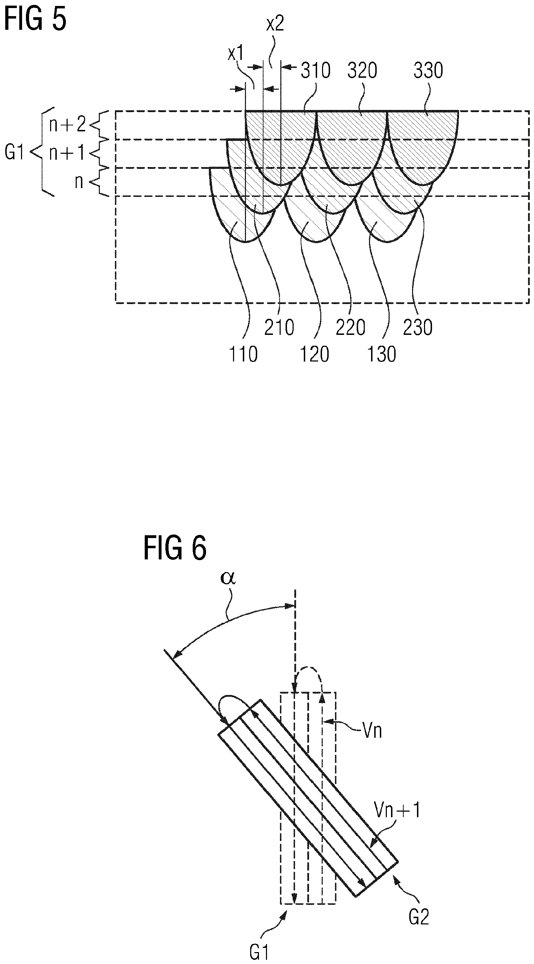

FIG 5 zeigt Bahnen 110, 120, 130, 210, 220, 230, 310, 320, 330 von verfestigtem Material in einer ersten, zweiten und dritten Schicht n, n+1, n+2 im Querschnitt. Weiterhin eingezeichnet sind ein erster Versatz x1 sowie ein zweiter Versatz x2, wobei der erste Versatz x1 den Versatz der Belichtungsvektoren der ersten Schicht n zur zweiten Schicht n+1 darstellt und analog der zweite Versatz x2 den Versatz der Belichtungsvektoren der zweiten Schicht n+1 zur dritten Schicht n+2 darstellt. Dementsprechend entsprechen die Versätze auch dem Versatz der tatsächlich verfestigten Bahnen 110, 120, 130, 210, 220, 230, 310, 320, 330 zueinander. Die erste, zweite und dritte Schicht n, n+1, n+2 sind dabei wiederum in eine Gruppe G1 gruppiert und weisen dementsprechend dieselbe Ausrichtung auf.

FIG 6 zeigt schematisch einen Winkel α zwischen zwei Gruppen G1 und G2. Gemäß der Erfindung ist es vorgesehen, dass aufeinanderfolgende Gruppen G1, G2 zueinander rotiert sind. D.h. die Belichtungsvektoren Vn der ersten Gruppe G1 stehen im Winkel α zu den Belichtungsvektoren Vn+1 der zweiten Gruppe G2. Da die Belichtungsvektoren und die sich daraus ergebenden verfestigten Bahnen innerhalb der Gruppen zueinander parallel sind, gilt der der Winkel für die Belichtungsvektoren in einer Gruppe bzgl. den Belichtungsvektoren der darauffolgenden Gruppe. Es hat sich gezeigt, dass 67 Grad ein guter Kompromiss aus seltenen Wiederholungen der Winkel und gleichmäßiger Temperaturverteilung über die Gruppen hinweg ist.

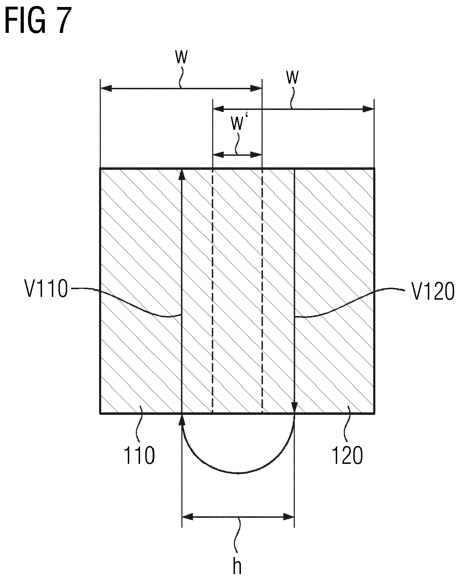

FIG 7 zeigt eine erste Bahn 110 und eine zweite Bahn 120 mit ihren Belichtungsvektoren V110, V120. Die Bahnen 110, 120 weisen jeweils eine Breite w sowie einen Abstand h zueinander auf. Weiterhin überlappen sich die Bahnen 110, 120, weil der Abstand h kleiner gewählt ist als die Breite w der Bahnen 110, 120. Der Bereich, in dem sich die Bahnen 110, 120 überlappen ist als Überlapp w' gekennzeichnet. Der Überlapp ist kann dabei je nach verwendetem Prozess und dessen Bahngenauigkeit etwas variieren. Der Überlapp kann dabei im Durchschnitt +/- 0% betragen, die Bahnen sind also durchschnittlich auf Stoß angeordnet.

Zusammenfassend betrifft die Erfindung ein Verfahren zum schichtweisen Herstellen eines Objekts mit einem pulverbasierten 3D-Druckverfahren durch selektives Verfestigen von Schichten (n, n+1,n+2) eines Pulvers in einem Pulverbett (100). Um lokalen Überhitzungen bei selektiven, pulverbasierten 3D-Druckverfahren, vorzubeugen werden jeweils zumindest zwei aufeinanderfolgende Schichten (n, n+1,n+2) zu einer Gruppe (G1, G2) zusammengefasst. Das Verfahren umfasst weiterhin für jede der Gruppen (G1, G2) die folgenden Schritte:
- Bereitstellen einer ersten Schicht (n) des Pulvers,
- Verfestigen zumindest eines Teils der ersten Schicht (n) mit ersten Belichtungsvektoren (Vn), die zueinander parallel und in einem definierbaren Abstand (h) zueinander angeordnet sind,
- Bereitstellen einer zweiten Schicht (n+1) Pulver,
- Verfestigen zumindest eines Teils der zweiten Schicht (n+1) mit zweiten Belichtungsvektoren (Vn+1), die um einen Versatz (x1, x2) parallel bezüglich der ersten Belichtungsvektoren (Vn) angeordnet sind,
wobei die Belichtungsvektoren (Vn, Vn+1, Vn+2) von aufeinanderfolgenden Gruppen (G1, G2) um einen Winkel (α) zueinander rotiert sind.

### Bezugszeichen

- 100: Pulverbett
- n, n+1, n+2: Schichten
- V1, V2, V3: Belichtungsvektoren
- h: Abstand der Belichtungsvektoren
- 110, 120, 130: Bahnen von verfestigtem Material in einer ersten Schicht
- 210, 220, 230: Bahnen von verfestigtem Material in einer zweiten Schicht
- 310, 320, 330: Bahnen von verfestigtem Material in einer dritten Schicht
- w: Breite der Bahnen
- w': Überlapp der Bahnen
- d: Tiefe der Bahnen
- G1: erste Gruppe von Schichten
- G2: zweite Gruppe von Schichten
- x1: erster Versatz
- x2: zweiter Versatz
- α: Winkel zwischen den Gruppen

## Patentansprüche

1. Verfahren zum schichtweisen Herstellen eines Objekts mit einem pulverbasierten 3D-Druckverfahren durch selektives Verfestigen von Schichten (n, n+1,n+2) eines Pulvers in einem Pulverbett (100), wobei jeweils zumindest zwei aufeinanderfolgende Schichten (n, n+1,n+2) Teil einer Gruppe (G1, G2) sind, umfassend die Schritte für jede der Gruppen (G1, G2):
- Bereitstellen einer ersten Schicht (n) des Pulvers,
- Verfestigen zumindest eines Teils der ersten Schicht (n) mit ersten Belichtungsvektoren (Vn), die zueinander parallel und in einem definierbaren Abstand (h) zueinander angeordnet sind,
- Bereitstellen einer zweiten Schicht (n+1) Pulver,
- Verfestigen zumindest eines Teils der zweiten Schicht (n+1) mit zweiten Belichtungsvektoren (Vn+1), die um einen Versatz (x1, x2) parallel bezüglich der ersten Belichtungsvektoren (Vn) angeordnet sind,
wobei die Belichtungsvektoren (Vn, Vn+1, Vn+2) von aufeinanderfolgenden Gruppen (G1, G2) um einen Winkel (α) zueinander rotiert sind.

2. Verfahren nach Anspruch 1, wobei der Abstand (h) so gewählt ist, dass durch das Verfestigen entstehende Bahnen (110,...,330) einen mittleren Überlapp (w') von höchstens 20%, vorzugsweise von höchstens 10% aufweisen.

3. Verfahren nach Anspruch 1 oder 2, wobei der Abstand (h) so gewählt ist, dass die durch das Verfestigen entstehenden Bahnen (Pn, Pn+1,Pn+2) einen mittleren Überlapp (w') von 10% bis -10% aufweisen.

4. Verfahren nach einem der vorhergehenden Ansprüche, wobei der Versatz (x1, x2) höchstens 50% einer Breite (w) der durch das Verfestigen entstehenden Bahnen (110,...,330) entspricht.

5. Verfahren nach einem der vorhergehenden Ansprüche, wobei der Winkel (α) so gewählt ist, dass die Ausrichtung einer der folgenden Gruppen (G1, G2) frühestens nach der Verfestigung von 10 Gruppen (G1, G2) wieder der ursprünglichen Gruppe entspricht.

6. Verfahren nach einem der vorhergehenden Ansprüche, wobei der Winkel (α) mindestens 30°, insbesondere mindestens 50° beträgt.

7. Verfahren nach einem der vorhergehenden Ansprüche, wobei der Winkel (α) höchstens 150°, insbesondere höchstens 130° beträgt.

8. Verfahren nach einem der vorhergehenden Ansprüche, wobei der Winkel (α) verschieden von 90° oder einem Vielfachen von 90° gewählt ist.

9. Verfahren nach einem der vorhergehenden Ansprüche, wobei die durch das Verfestigen entstehenden Bahnen (110,...,330) zumindest die vorhergehende Schicht (n, n+1, n+2) durchdringt, insbesondere die vorhergehenden drei Schichten.

10. Verfahren nach einem der vorhergehenden Ansprüche, wobei zumindest eine der Gruppen (G1, G2) zumindest eine dritte Schicht (n+2) umfasst, wobei die zweite Schicht (n+1) um einen ersten Versatz (x1) bezüglich der ersten Schicht (n) und die dritte Schicht (n+2) um einen zweiten Versatz (x2) bezüglich der zweiten Schicht (n+1) versetzt angeordnet ist.
